# EUROPÄISCHE PATENTANMELDUNG

(11) **EP 0 553 706 A1**
(43) Veröffentlichungstag der Anmeldung: **04.08.1993**
(21) Anmeldenummer: 93100844.5
(22) Anmeldetag: 21.01.1993
(51) Int. Cl.: B01D 53/26, F25J 3/08

(54) **Vorrichtung zum Kühltrocknen von Gasen**

(30) Priorität: 31.01.1992 DE 4202802
(71) Anmelder: Seiler, Wolfram, Dr., D-41466 Neuss (DE); Koch, Berthold, D-41468 Neuss (DE)
(72) Erfinder: Seiler, Wolfram, Dr., D-41466 Neuss (DE); Koch, Berthold, D-41468 Neuss (DE)
(74) Vertreter: Türk, Gille, Hrabal, Leifert

(57) **Zusammenfassung**

Es ist eine Vorrichtung zum Kühlen-Trocknen bzw. Kühlverflüssigen von Gasen offenbart, welche eine Wärmetauscheinrichtung (100,120) umfaßt, die von einem Kälteträger durchflossen ist und so weit heruntergekühlt wird, daß im behandelten Gas enthaltene Dämpfe auskondensieren, ausreifen bzw. auseisen und/oder sich verflüssigen. Die Wärmetauscheinrichtung (100,120) und die Trockeneinrichtung bestehen aus einer integralen Einheit. Mindestens ein Ableiter (104,106,124) schleust das flüssige Kondensat, das Reif- bzw. Eiskondensat und/oder die Flüssigkeit, die von dem Gasstrom abgetrennt sind, aus der Einheit heraus.

## Beschreibung

Die Erfindung betrifft eine Vorrichtung zum Kühltrocknen von Gasen, insbesondere von Druck Luft, welche eine Wärmetauscheinrichtung und eine Trockeneinrichtung in einer integralen Einheit umfaßt, die von einem Kälteträger auf eine solche Temperatur herunterkühlbar sind, daß sich die im Gas enthaltene Feuchtigkeit als Kondensat niederschlägt.

In Gasen ist unter atmosphärischen Bedingungen im allgemeinen Feuchtigkeit enthalten, in der Regel Wasserdampf, aber auch Beimengen anderer bei höheren Temperaturen flüchtiger Substanzen. Dies gilt insbesondere bei unter Druck stehenden Gasen.

Zum Trocknen von Gasen, insbesondere von Druck Luft, werden oberhalb von O^{o} C Kältetrockner und unterhalb einer Temperatur von O^{o} C bzw. unterhalb des Druck-Taupunktes Adsorptions- oder Absorptionstrockner eingesetzt.

Bei einer Kühlung oder Kühlverflüssigung von Gasen wie Luft erfolgt - sofern eine Trocknung erforderlich ist - diese in einer getrennten Stufe, woraufhin dann auf den Sollwert hinuntergekühlt wird. Es werden somit zwei unabhängige und getrennte Einheiten benötigt.

Die Kühltrocknung von Gasen ist daher sowohl in energetischer als auch in konstruktiver Hinsicht problematisch.

Eine im Energieverbrauch günstige Vorrichtung zum Kühltrocknen von Gasen ist aus der DE-A-39 41 713 bekannt. Diese verwendet zwei Wärmetauscher, wobei dem zum Kühlen verwendeten Haupt-Wärmetauscher ein Vorwärmetauscher vorgeschaltet ist, in dem das einströmende Gas durch das ausströmende, schon getrocknete Gas abgekühlt wird. Um Vereisungen zu vermeiden, die zu einem Ausfall der Anlage führen können, wird die Wärmeübertragung begrenzt, so daß ein ungestörter Betrieb gewährleistet ist. Dies erfordert nicht nur besondere bauliche Maßnahmen, sondern auch einen nicht unbeträchtlichen Steueraufwand.

Es ist Aufgabe der Erfindung, eine einfach aufgebaute und wirkungsvoll arbeitende Vorrichtung zum Kühltrocknen von Gasen zu schaffen, bei der die Gefahr der Vereisung gebannt ist.

Diese Aufgabe wird von einer Vorrichtung der eingangs genannten Gattung mit den Merkmalen des kennzeichnenden Teiles von Patentanspruch 1 gelöst. Vorteilhafte Ausgestaltungen sind Gegenstand der Unteransprüche.

Erfindungsgemäß bilden die Wärmetauscheinrichtung und die Trockeneinrichtung eine integrale Baueinheit, bei der zumindest ein Ableiter für flüssiges Kondensat vorgesehen ist. Abkühlung und Trocknung sind nunmehr vereinigt, auch bei Abkühlung unter O^{o} C. Das flüssige Kondensat wird bei der Entstehung durch einen an geeigneter Stelle angebrachten Ableiter abgeführt, so daß ein Feuchteüberschuß vermieden wird, der bei Abkühlung auf tiefe Temperaturen zu einer Vereisung der Vorrichtung führen könnte.

Vorteilhaft weist die erfindungsgemäße Vorrichtung wenigstens zwei Wärmetauschbereiche auf, von denen wenigstens einer auf eine Temperatur größer als O^{o} C kühlbar ist. Ein Ableiter für Kondensat kann dann zumindest am Ende dieser Kühlstrecke vorgesehen sein, aber auch in ihrem Anfangsbereich, wo erfahrungsgemäß ein großer Anteil des flüssigen Kondensates anfällt.

Erfindungsgemäß sind wenigstens zwei Wärmetauschbereiche vorgesehen, von denen wenigstens einer auf eine Temperatur kleiner als O^{o} C kühlbar ist. Hier erfolgt die Auseisung in Form von Rauhreifniederschlägen auf besonders gestalteten Oberflächen von Kühlflächen. Auch kann in diesem Bereich ein Ableiter für Kondensat vorgesehen sein, um flüssige Bestandteile abzuseparieren.

Eine Vorrichtung zum stufenweisen Kühlen kann aufgebaut werden, indem jeder der Wärmetauschbereiche mit einer separaten Versorgungseinrichtung für einen Kälteträger versehen wird. Damit können die einzelnen Wärmetauschbereiche unabhängig voneinander auf unterschiedliche Temperaturen gebracht werden.

Als Kälteträger kommen neben Kältemitteln aus Kälteaggregaten, die insbesondere über den Kältemitteldruck eine Temperaturregelung bewirken, auch extern geregelte Kälteträger wie Solen oder tiefkühlbare Flüssigkeiten in Frage. Es kann in allen Fällen mit mehreren unterschiedlichen Temperaturniveaus gearbeitet werden, was besonders wichtig ist, wenn auch oberhalb von O^{o} C vorgekühlt wird. Dabei darf es nicht zu Überschneidungen zwischen flüssigen und festen Phasen im Kondensatzustand kommen.

Nach einer weiteren Ausführungsform der Erfindung kann ein die Wärmetauschbereiche umgebendes Kälterohr vorgesehen sein, in dem das aus den Wärmetauschbereichen austretende Gas rückgeführt ist, wobei den Wärmetauschbereichen eine Einrichtung zum Entspannen des Gases nachgeschaltet ist.

Im folgenden soll die Erfindung beispielhaft anhand der beigefügten Zeichnungen näher erläutert werden. Es zeigt:
- Fig. 1: eine erstes Ausführungsbeispiel einer Vorrichtung gemäß der vorliegenden Erfindung, bei der ein durchgehender Wärmetauscher mit Trocknungsfunktion für Temperaturen sowohl größer als auch kleiner als O^{o} C vorgesehen ist,
- Fig. 2: ein zweites Ausführungsbeispiel einer Vorrichtung gemäß der vorliegenden Erfindung, bei der ein erster Wärmetauschbereich mit Trocknungsfunktion für Temperaturen größer als O^{o} C und ein davon getrennter zweiter Wärmetauschbereich mit Trocknungsfunktion für Temperaturen kleiner als O^{o} C vorgesehen ist,
- Fig. 3: ein drittes Ausführungsbeispiel einer Vorrichtung gemäß der vorliegenden Erfindung, bei der ein erster und ein zweiter Wärmetauschbereich mit Trocknungsfunktion für Temperaturen größer als O^{o} C und ein dritter und ein vierter Wäremetauschbereich mit Trocknungsfunktion für Temperaturen kleiner als O^{o} C vorgesehen ist, wobei die Bereiche jeweils getrennt sind,
- Fig. 4: ein viertes Ausführungsbeispiel einer Vorrichtung gemäß der vorliegenden Erfindung, bei der ein durchgehender Wärmetauscher mit Trocknungsfunktion sowie mit einem durch Druckabsenkung erzeugten Kühlgegenstrom vorgesehen ist,
- Fig. 5: ein fünftes Ausführungsbeispiel einer Vorrichtung gemäß der vorliegenden Erfindung, die ähnlich wie die Vorrichtung aus Fig. 4 ausgebildet ist, bei der der Gasstrom regelnd entspannt wird zur Steuerung der Gastemperaturabsenkung.
- Fig. 6: ein sechstes Ausführungsbeispiel einer Vorrichtung gemäß der vorliegenden Erfindung, bei der zwei getrennte Wärmetauschbereiche der aus Fig. 4 und 5 bzw. Fig. 2 und 3 ersichtlichen Art miteinander verbunden sind, und
- Fig. 7: ein siebentes Ausführungsbeispiel, einer Vorrichtung gemäß der vorliegenden Erfindung, bei der zwei voneinander getrennte Wärmetauschbereiche der aus Fig. 2 ersichtlichen Art in stehender Anordnung nebeneinander vorgesehen sind.

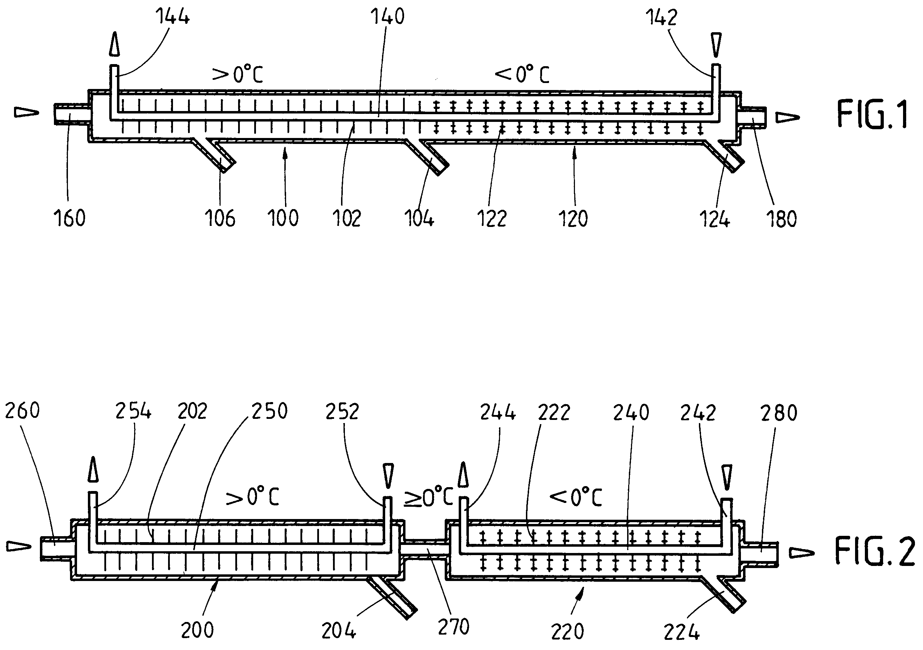

Fig. 1 zeigt ein erstes Ausführungsbeispiel gemäß dem ein durchgehender Wärmetauscher 100, 120 in Form einer langgestreckten zylindrischen Röhre vorgesehen ist, welche im wesentlichen über ihre gesamte Länge von einer zentral angeordneten Leitung 140 durchsetzt ist, in welcher ein Kälteträger geführt wird. An einer Stirnseite des Wärmetauschers 100, 120 befindet sich ein Gaseinlaß 160, durch den das zu trocknende Gas in den Wärmetauscher 100, 120 eingeführt wird, an der anderen Stirnseite befindet sich der Gasauslaß 180 für das getrocknete Gas.

Der Wärmetauscher ist in zwei aneinander anschließende Bereiche unterteilt, wobei in dem dem Gaseinlaß 160 benachbarten Wärmetauschbereich 100 eine Temperatur größer als O^{o} C, in dem dem Gasauslaß 180 benachbarten Wärmetauschbereich eine Temperatur kleiner als O^{o} C herrscht, die jeweils von dem kontinuierlich durch die Leitung 140 strömenden Kälteträger erzeugt wird. Ein Einlaß 142 für den Kälteträger ist dabei in der Nähe des Gasauslasses 180, durch den Mantel des Wärmetauschers geführt, ein Auslaß 144 für den Kälteträger in der Nähe des Gaseinlasses 160, wobei sich der Kälteträger bei seinem Weg durch die Leitung 140 bzw. die Wärmetauschbereiche 100, 120 nach und nach erwärmt.

Dabei kann der Grad der Erwärmung beispielsweise über seine Strömungsgeschwindigkeit bzw. seinen Druck und/oder seine Durchflußmenge gesteuert werden.

An der Außenseite der Leitung 140 sind Kühlflächen 102, 122 angeordnet, die für jeden Wärmetauschbereich 100, 120 speziell gestaltet sind, damit sie ihre Kühl- und Trockenfunktion optimal erfüllen können. So sind die Kühlflächen 122 im Wärmetauschbereich 120, der bei Temperaturen unterhalb von O^{o} C betrieben wird, so ausgelegt, daß sie die Anlagerung von Reif oder Eis begünstigen. An der Unterseite des Wärmetauschers sind Ableiter 104, 106, 124 herausgeführt, und zwar im Wärmetauschbereich 100 jeweils ein Ableiter 104 für flüssiges Kondensat in der Nähe des überganges zum Wärmetauschbereich 120 und ein Ableiter 106 für flüssiges Kondensat etwa nach einem Drittel der Kühlstrecke, also näher am Gaseinlaß 160 liegend, und im Wärmetauschbereich 120 am Ende der Kühlstrecke, also etwa im Bereich des Einlasses 142 für das Kältemittel, ein Ableiter 124 für sogenanntes Eis-Kondensat oder verflüssigtes Gas.

Durch den Gaseinlaß 160 in die Vorrichtung eingeleitetes Gas wird durch die Wirkung des Kältemittels gekühlt, wobei zunächst eine Temperatur größer als O^{o} C beibehalten wird, so daß sich Kondensat in flüssiger Phase abscheidet und durch den Ableiter 106 und auch den Ableiter 104 ausgelassen wird. Mit dieser Maßnahme des Abführens flüssigen Kondensates wird der Bildung von massivem Eisansatz im Wärmetauschbereich 120 vorgebeugt.

Das heruntergekühlte und teilgetrocknete Gas gelangt dann in den Wärmetauschbereich 120, dessen Kühlflächen 122 gegenüber denen des Wärmetauschbereiches 100 eine vergrößerte Oberfläche ausweisen und die das Ausfällen des Kondensates als Feineis, das sich an die Kühlflächen 122 bindet, begünstigen.

Zum Ablösen des Reif- oder Feineisbelages wird zweckmäßigerweise der Gasstrom unterbrochen und der Belag abgeschockt oder abgetaut. Falls sich der Gasstrom nicht unterbrechen läßt, wird auf einen anderen Wärmetauscher bzw. eine weitere gleiche Vorrichtung umgeschaltet, so daß ein Wechselbetrieb vorgenommen werden kann.

In Fig. 2 ist ein zweites Ausführungsbeispiel dargestellt, bei dem ein erster Wärmetauschbereich 200 mit Trocknungsfunktion für Temperaturen größer als O^{o} C und ein davon getrennter zweiter Wärmetauschbereich 220 mit Trocknungsfunktion für Temperaturen kleiner als O^{o} C vorgesehen ist. Beide Wärmetauschbereiche 200, 220, die eine langgestreckt ausgebildete Einheit bilden, kommunizieren über ein Verbindungsrohr 270, das an zwei benachbarten gegenüberliegenden Stirnseiten der als im wesentlichen geschlossene Rohre gestalteten Wärmetauschbereiche 200, 220 angeschlossen ist und in dem eine Temperatur von etwa O^{o} C oder leicht darüber herrscht. An der weiteren Stirnseite des Wärmetauschbereiches 200 befindet sich ein Gaseinlaß 260, durch den das zu trocknende Gas in den Wärmetauschbereich 200 eingeführt wird. An der weiteren Stirnseite des Wärmetauschbereiches 220 befindet sich der Gasauslaß 280 für das getrocknete und gekühlte Gas.

Für jeden Wärmetauschbereich 200, 220 ist eine eigene Leitung 240, 250 für Kältemittel, im wesentlichen über die gesamte Länge des jeweiligen Wärmetauschbereiches 200, 220 zentral angeordnet, vorgesehen, wobei die Leitungen 240, 250 so mit einem Kälteträger versorgt werden, daß sich das weitere oben beschriebene Temperaturprofil ergibt. Jede Leitung trägt wiederum Kühlflächen 202, 222, die nach den spezifischen Kühlerfordernissen ausgestaltet sind. Einlaß 252, 242 und Auslaß 254, 244 sind wie bei dem in Fig. 1 beschriebenen Ausführungsbeispiel angeordnet, nun aber in jedem der Wärmetauschbereiche 200, 220.

Bei beiden Wärmetauschbereichen 200, 220 ist weiterhin an der Unterseite ein Ableiter 204, 224 für Kondensat vorgesehen, jeweils am Ende der Kühlstrecke des entsprechenden Bereiches. Es dient dabei der Ableiter 204 zum Ableiten des flüssigen Kondensates, das in dem Wärmetauschbereich 200 abgeschieden wird, bevor das Gas in das gegenüber den Wärmetauschbereichen 200, 220 verengte Verbindungsrohr 270 eintritt. Die Abscheidung in Form von Eis-Kondensat oder verflüssigtem Gas geschieht wieder in dem niedertemperaturigen Wärmetauschbereich 220.

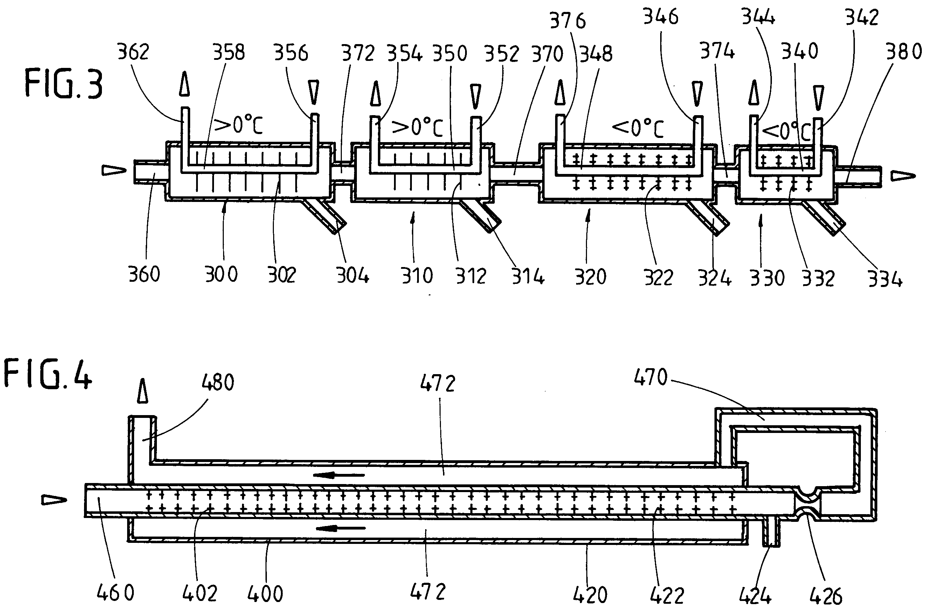

Gekühlt und getrocknet werden kann auch in mehreren Temperaturstufen. Dazu zeigt Fig. 3 ein drittes Ausführungsbeispiel, bei dem ein erster und ein zweiter Wärmetauschbereich 300, 310 mit Trocknungsfunktion für Temperaturen größer als O^{o}C und ein dritter und ein vierter Wärmetauscherbereich 320, 330 mit Trocknungsfunktion für Temperaturen kleiner als O^{o}C vorgesehen ist, wobei die Bereiche jeweils getrennt sind, so daß in jedem von ihnen eine unterschiedliche Temperatur eingestellt werden kann.

Das zu trocknende und zu kühlende Gas wird durch einen Gaseinlaß 360 an der Stirnseite des ersten Wärmetauschbereiches 300 eingeleitet, wird dort in einer ersten Stufe gekühlt, wobei anfallendes Kondensat, in flüssiger Form, über den Ableiter 304 ausgelassen wird, tritt dann über ein Verbindungsrohr 372 mit verengtem Querschnitt in den zweiten Wärmetauschbereich 310 ein, wo eine niedrigere Temperatur als im ersten Bereich herrscht, die aber immer noch oberhalb von O^{o}C liegt. Kondensat kann wiederum durch einen Ableiter 314 aus dem Wärmetauschbereich entfernt werden. Anschließend gelangt das Gas durch ein Verbindungsrohr 370, das dem Verbindungsrohr 270 der Fig. 2 entspricht, in den dritten Wärmetauschbereich 320, in dem nun eine Temperatur niedriger als O^{o} C eingestellt ist, von dort über ein Verbindungsrohr 374 in den vierten Wärmetauschbereich 330, wo die niedrigste Temperatur der Gesamtanordnung herrscht, bis es schließlich durch den Gasauslaß 380 entlassen wird. Auch die Wärmetauschbereiche 320 und 330 sind jeweils mit einem Ableiter 324 bzw. 334 am Ende der Kühlstrecke versehen, um das anfallende Kondensat aus lassen zu können.

Jeder Wärmetauschbereich 300, 310, 320, 330 ist mit einer Leitung 358, 350, 348, 340 durchsetzt, wobei am niedertemperaturigen Ende des jeweiligen Wärmetauschbereiches ein Einlaß 356, 352, 346, 342 für den Kälteträger, am höhertemperaturigen Ende ein Auslaß 362, 354, 376, 344 nach außen geführt ist, die auf an sich bekannte Weise über ein Kälteaggregat versorgt werden. Auf den Leitungen 358, 350, 348, 340 sind wieder die entsprechend gestalteten Kühlflächen 302, 312, 322, 332 angeordnet. Dabei sind sie in dem ersten Wärmetauschbereich 300 in dichterem gegenseitigen Abstand angeordnet als im zweiten.

Die Wärmetauschbereiche können unterschiedliche Längen aufweisen, wenn dies für die optimale Kühlfunktion erforderlich erscheint. Beispielsweise ist der vierte Wärmetauschbereich 330 erheblich kürzer gestaltet als die übrigen.

Bei den bisher beschriebenen Ausführungsformen erfolgt die Kühlung durch einen Kälteträger wie ein Kältemitel eines oder mehrerer Kälteaggregate. Es ist aber auch eine Gegenstromkühlung mit dem gekühlten Gas selbst möglich, wie jetzt im Zusammenhang mit Fig. 4 beschrieben werden soll.

In einem Wärmetauscher 400, 420 mit zwei Wärmetauschbereichen, der als zylinderförmiges Rohr gestaltet ist, sind gemäß Fig. 4 an den Innenwänden Kühlflächen 402, 422 in der gewünschten Ausgestaltung angeordnet. Dabei entsprechen die Kühlflächen 402 in dem Wärmetauschbereich 400 denen für Temperaturen oberhalb von O^{o} C, die Kühlflächen 422 in dem Wärmetauschbereich 420 denen für Temperaturen unterhalb O^{o} C.

Der Wärmetauscher 400, 420 ist im wesentlichen auf seiner gesamten Länge von einem Kälterohr 472 umgeben, das über eine Rohrschleife 470 mit dem Inneren des Wärmetauschers 400, 420 in Verbindung steht und am entgegengesetzten Ende einen Gasauslaß 480 aufweist. Durch einen Gaseinlaß 460 in den Wärmetauscher 400, 420 eingeleitetes Gas wird also rückgeführt und dabei als Kälteträger benutzt. Die dazu erforderliche weitere Abkühlung des Gases geschieht innerhalb der Rohrschleife 470, in der,strömungsmäßig hinter einem Ableiter 424 für Kondensat, eine Verengung 426, beispielsweise in Form einer Venturi-Düse, vorgesehen ist. Hinter der Verengung 426 entspannt sich das Gas und kühlt sich dabei ab.

Nach einiger Zeit können mit einer derartigen Anordnung tiefe Temperaturen erreicht werden, wobei die Feuchtigkeit aus dem behandelten Gas immer mehr herauskondensiert wird. Allerdings kommt es bei einem derartigen eigengenerativen Prozeß sehr leicht zu Gas-Verflüssigungen bei definierten Druck-Temperatur-Relationen. Das verflüssigte Gas kann aber - ähnlich wie Kondensat - aus dem Wärmetauscher abgeleitet werden.

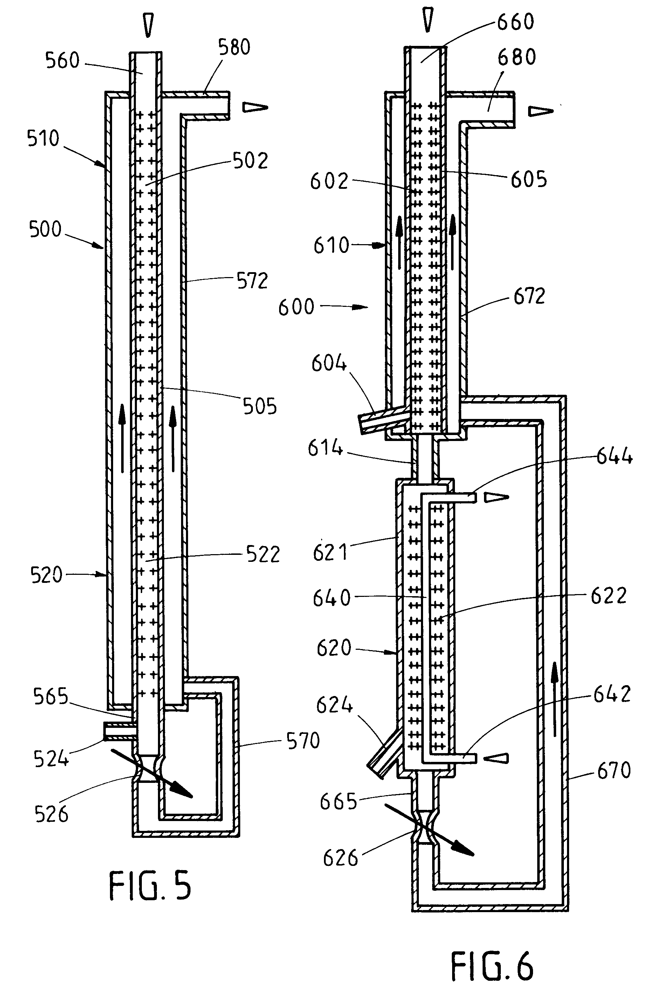

Die Ausführungsform gemäß Fig. 5 ist der Ausführungsform der Vorrichtung, die in Verbindung mit Fig. 4 beschrieben ist, ähnlich. Wiederum ist eine Gegenstromkühlung mit den bereits gekühlten Gas selbst vorgesehen. Der als zylindrisches Rohr ausgebildete Wärmetauscher 500 hat zwei Wärmetauschbereiche 510 und 520, wobei die Gaszufuhr durch ein inneres Rohr 505 erfolgt, welches von einem äußeren Rohr 572, das auch als Kälterohr bezeichnet werden kann, ummantelt ist. Das äußere Rohr 572 erstreckt sich über den größten Teil der Länge des inneren Rohres 505.

Im inneren Rohr 505 sind in dieses radial hineinragende Kühlflächen 502 und 522, die auch als Wärmetauschflächen bezeichnet werden können, angeordnet. Die im Wärmetauschbereich 510 vorgesehenen Kühlflächen 502 sind für Temperaturen oberhalb 0^{o} C, die im Wärmetauschbereich 520 vorgesehenen Kühlflächen 522 für Temperaturen unterhalb 0^{o} C vorgesehen. In der Zeichnung sind diese Kühlflächen symbolisch gleich dargestellt, jedoch können dieselben bei der praktischen Ausführung der Vorrichtung auch unterschiedlich ausgebildet sein.

Das aus dem äußeren Rohr 572 herausragende obere Ende 560 des inneren Rohres 505 dient als Gaseinlaß, während das entgegengesetzte Ende 565 über eine Rohrschleife 570 mit dem unteren Ende des äußeren Rohres 572 in Verbindung steht. Durch das als Gaseinlaß dienende obere Ende 560 in das innere Rohr 505 und damit in den Wärmetauscher 500 eingeleitetes Gas wird also aus dem inneren Rohr von unten nach oben rückgeführt und beim Rückführen durch das äußere Rohr 572 als Kälteträger benutzt. Die dazu erforderliche weitere Abkühlung des Gases geschieht innerhalb der Rohrschleife 570, in der - strömungsmäßig hinter einem Ableiter 524 für Kondensat - eine Drossel 526 angeordnet ist, die eine Venturi-Düse oder auch eine verstellbare Drossel sein kann.

Hinter der Drossel 526 entspannt sich das durch das innere Rohr 505 zugeführte Gas und kühlt dabei ab, bevor es in das äußere Rohr 572 gelangt und dieses in Pfeilrichtung von unten nach oben durchströmt, worauf es durch einen Auslaß 580 den Wärmetauscher 500 verläßt.

Auch mit einer derartigen Anordnung können nach einer bestimmten Anlaufzeit tiefe Temperaturen erreicht werden, wobei im durchgeführten Gas enthaltene Feuchtigkeit immer mehr herauskondensiert wird. Bei definierten Druck-Temperatur-Relationen kommt es bei einem derartigen eigengenerativen Prozeß aber sehr leicht zu Verflüssigungen des Gases.

Der in Fig. 6 dargestellte Wärmetauscher 600 kombiniert zwei Wärmetauschbereiche 610 und 620 der aus Fig. 4 und 5 bzw. 2 und 3 ersichtlichen Konstruktionen.

Der Wärmetauschbereich 610 enthält ein inneres Rohr 605, in dem etwa radial nach innen vorstehende Kühlflächen 602 bzw. Wärmetauschflächen angeordnet sind. Dieses innere Rohr 605 ist auf nahezu seiner gesamten Länge von einem äußeren Rohr 672, das auch als Kälterohr bezeichnet werden kann, ummantelt, so daß das durch das überstehende obere Ende 660 eingeströmte Gas aus dem inneren Rohr 605 von unten nach oben in Pfeilrichtung zu einem Auslaß 680 sozusagen als Kühlmittel zurückströmen kann, wo es den Wärmetauscher verläßt.

Nahe dem unteren Ende des inneren Rohres 605 ist ein stutzenförmiger Ableiter 604 angeordnet, durch den im inneren Rohr 605 anfallendes Kondensat aus dem Wärmetauscher in nicht näher dargestellter Weise abgeleitet werden kann.

über ein koaxial zum inneren Rohr 605 verlaufendes Verbindungsrohr 614 ist der zweite Wärmetauschbereich 620 angeschlossen, der ein rohrförmiges förmiges Gehäuse 621 aufweist, nahe dessen unteren Ende ein stutzenförmiger Ableiter 624 angeordnet ist, durch den im zweiten Wärmetauschbereich 620 anfallendes Kondensat in nicht näher dargestellter Weise abgeleitet werden kann.

Im rohrförmigen Gehäuse 621 des zweiten Wärmetauschbereiches 620 ist koaxial eine Leitung 640 für einen Kälteträger angeordnet, der durch einen am unteren Ende befindlichen Einlaß 642 zuströmt und durch einen am oberen Ende vorgesehenen Auslaß 644 den Wärmetauschbereich 620 wieder verläßt. Auf der Leitung 640 befinden sich innerhalb des Gehäuses 621 radial vorstehende Kühlflächen 622 bzw. Wärmetauschflächen.

An das untere Ende 665 des Gehäuses 621 ist eine Rohrschleife 670 angeschlossen, in der sich eine Drossel 626, beispielsweise eine Venturi-Düse, die variabel sein kann, befindet. Diese Rohrschleife 670 verbindet das untere Ende des zweiten Wärmetauschbereiches 660 mit dem unteren Ende des äußeren Rohres 672 des oberen Wärmetauschbereiches 610, so daß das durch die beiden Wärmetausch-bereiche 610 und 620 hindurchgeströmte Gas zum ersten Wärmetauschbereich 610 unter Zwischenkühlung in der Rohrschleife 670 zurück-geführt werden kann, um dort, wie oben in anderem Zusammenhang bereits erläutert, als Kältemittel oder Kühlmittel zu wirken.

Die Arbeitsweise des Wärmetauschers 600 ist dementsprechend ähnlich wie in Verbindung mit den vorher beschriebenen Ausführungsbeispielen erläutert.

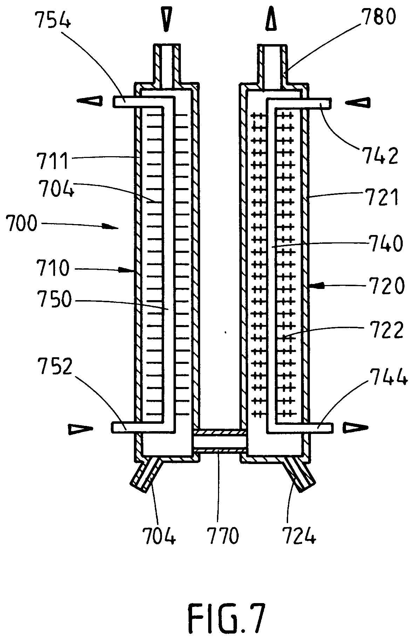

Der in Fig. 7 gezeigte Wärmetauscher 700 hat zwei Wärmetauschbereiche 710 und 720, die ähnlich wie die beiden Wärmetauschbereiche des Ausführungsbeispiels gemäß Fig. 2 ausgebildet und in Reihe geschaltet sind, die jedoch nebeneinander aufrecht stehen. Der Wärmetauschbereich 710 ist dabei für Temperaturen oberhalb O^{o} C und der Wärmetauschbereich 720 für Temperaturen unterhalb O^{o} C bestimmt. In einem die beiden Wärmetauschbereiche 710 und 720 an ihrem jeweils unteren Ende verbindenden Rohr 770 beträgt die Temperatur etwa O^{o} C.

Der Wärmetauschbereich 710 hat ein aufrechtstehendes rohrförmiges Gehäuse 711, an dessen oberen Ende ein als Einlaß für zu behandelndes Gas dienender Stutzen 760 angebracht ist. Innerhalb des rohrförmigen Gehäuses 711 erstreckt sich koaxial eine Rohrleitung 750 für den Durchstrom eines Kälteträgers, welcher nahe dem unteren Ende des Gehäuses 711 durch einen Einlaß 752 zuströmt und den Wärmetauschbereich 710 nahe dem oberen Ende des Gehäuses 711 durch einen Auslaß 754 wieder verläßt.

Auf der Rohrleitung 750 sind innerhalb des Gehäuses 711 radial verlaufende Kühlflächen 702 angeordnet, die auch als Wärmetauschflächen bezeichnet werden können und für einen verbesserten Wärmetausch zwischen dem von oben nach unten durchströmenden Gas und dem in Gegenrichtung strömenden Kälteträger oder Kühlmittel dienen.

Am unteren Ende des Gehäuses 711 ist ein stutzenförmiger Ableiter 704 zum Ableiten von im Gehäuse 711 anfallendem Kondensat vorgesehen.

Der Wärmetauschbereich 720 hat ein aufrechtstehendes rohrförmiges Gehäuse 721, an dessen unteren Ende ein stutzenförmiger Ableiter 724 zum Ableiten von im Gehäuse 721 anfallendem Kondensat, das im allgemeinen als Eis oder Reif anfällt, angeordnet ist. Am oberen Ende des rohrförmigen Gehäuses 721 befindet sich ein als Auslaß für das behandelte Gas dienender Stutzen 780.

Innerhalb des Gehäuses 721 des Wärmetauschbereiches 720 ist eine koaxial verlaufende Rohrleitung 740 für den Durchstrom eines weiteren Kälteträgers vorgesehen, der nahe dem oberen Ende des Gehäuses 721 durch einen stutzenförmigen Einlaß 742 zuströmt und den Wärmetauschbereich 720 durch einen nahe dem unteren Ende des Gehäuses 721 befindlichen stutzenförmigen Auslaß 744 wieder verläßt.

Innerhalb des Gehäuses 721 sind auf der Rohrleitung 740 radial verlaufende Kühlflächen 722 angeordnet, die einen verbesserten Wärmetausch zwischen dem von unten nach oben durch das Gehäuse strömenden zu behandelnden Gas und dem in Gegenrichtung durch die Rohrleitung 740 strömenden Kälteträger dienen.

Der in Fig. 7 dargestellteWärmetauscher 700 arbeitet im übrigen im wesentlichen ebenso wie in Verbindung mit den vorstehend erläuterten Ausführungsbeispielen beschrieben.

Grundsätzlich können alle Wärmetauscher und Gasführungsbehälter der Fig. 1 bis 6 horizontal wie vertikal angeordnet werden. Dabei wird sich die Ausbildung vom Abscheider bzw. Kondensatablaß konstruktiv ändern.

## Patentansprüche

1. Vorrichtung zum Kühlen-Trocknen bzw. Kühlverflüssigen von Gasen, welche eine Wärmetauscheinrichtung umfaßt, die von einem Kälteträger durchflossen ist und so weit heruntergekühlt wird, daß im Gas enthaltene Dämpfe auskondensieren, ausreifen bzw. auseisen und/oder verflüssigen, dadurch gekennzeichnet, daß die Wärmetauscheinrichtung und die Trockeneinrichtung aus einer integralen Einheit bestehen, wobei mindestens ein Ableiter das flüssige Kondensat, das Reif- bzw. Eiskondensat und/oder die Flüssigkeit trennbar aus dem Gasstrom schleust.

2. Vorrichtung nach Anspruch 1, dadurch gekennzeichnet, daß wenigstens zwei Wäremetauschbereiche vorhanden sind, die nach ihrer Temperaturstufe getrennt das Kondensat zurückhalten.

3. Vorrichtung nach Anspruch 1 oder 2, dadurch gekennzeichnet, daß wenigstens ein Wärmetauschbereich auf Temperaturen unter O^{o} C kühlbar ist.

4. Vorrichtung nach Anspruch 1, 2 oder 3, dadurch gekennzeichnet, daß wenigstens ein Ableiter flüssiges Kondensat oder Eiskondensat aus dem Kühlbereich separiert.

5. Vorrichtung nach Anspruch 1, 2, 3 oder 4, dadurch gekennzeichnet, daß mindestens ein Wärmetauschbereich das bis dahin getrocknete Gas so tief abkühlt, daß es unter den gegebenen Druckbedingungen sich verflüssigt.

6. Vorrichtung nach Anspruch 5, dadurch gekennzeichnet, daß in den Verflüssigungsbereich mindestens ein Ableiter vorhanden ist, der Kondensat/Eiskondensat von flüssigem Gas trennend ableitet.

7. Vorrichtung nach Anspruch 1, dadurch gekennzeichnet, daß die Kältezufuhr des Primärwärmetauschers durch Entspannen des Gases nach dem Primärwärmetauscher und dann im Gegenstrom erfolgt.

8. Vorrichtung nach Anspruch 7, dadurch gekennzeichnet, daß die Kältezufuhr durch den Entspannungsgrad am Ende des Primärwärmetauschers regelbar ist.
